# EUROPÄISCHE PATENTSCHRIFT

(11) **EP 0 803 713 B1**
(45) Veröffentlichungstag und Bekanntmachung des Hinweises auf die Patenterteilung: **01.12.1999**
(21) Anmeldenummer: 97810059.2
(22) Anmeldetag: 04.02.1997
(51) Int. Cl.: G01F 1/84

(54) **Coriolis-Massedurchflussaufnehmer**
Coriolis mass flow sensor
Capteur de débit massique selon Coriolis

(30) Priorität: 27.04.1996 EP 96106697
(43) Veröffentlichungstag der Anmeldung: 29.10.1997
(73) Patentinhaber: Endress + Hauser Flowtec AG, CH-4153 Reinach BL 1 (CH)
(72) Erfinder: Drahm, Wolfgang, Dr., 42222 Zwingen (BL) (CH); Matt, Christian, Dipl.-Ing., 79539 Lörrach (DE)
(74) Vertreter: Morstadt, Volker, Dipl.-Ing.

(56) Entgegenhaltungen:
- FR-A- 2 598 801
- US-A- 4 747 312
- US-A- 5 218 873

## Beschreibung

Die Erfindung betrifft Coriolis-Massedurchflußaufnehmer, die jeweils in eine Rohrleitung mittels eines einlaß- und eines auslaßseitigen Anschlußelements einzusetzen sind.

Bei nach dem Coriolisprinzip arbeitenden Massedurchfluß-Meßgeräten beruht die Messung bekanntlich darauf, daß ein zu messendes, durch mindestens ein zu einem Schwingsystem gehörendes, gerades oder gebogenes schwingendes Meßrohr strömende Fluid Corioliskräfte erfährt. Dadurch schwingt das Meßrohr in den eingangsseitigen Abschnitten phasenverschoben gegenüber den ausgangsseitigen Abschnitten. Die Größe dieser Phasenverschiebung ist ein Maß für den Massedurchfluß.

Die Phasenverschiebung wird mittels Schwingungssensoren abgegriffen, die der mechanischen Schwingung eine für diese nach Betrag und Phase repräsentative elektrische Größe zuordnen, woraus der Massedurchfluß elektronisch bestimmt wird.

Die Erregung der erwähnten Schwingungen des Meßrohrs oder der Meßrohre erfolgt meist mittels elektromagnetischen Erregeranordnungen mit einem Dauermagneten, mit einem Kern, gegebenenfalls mit einem Anker und mit mindestens einer Erregerspule, wie sie z.B in der US-A 52 18 873, der US-A 55 31 126, der WO-A 88/02475 oder der WO-A 93/03336 im einzelnen beschrieben sind.

In der US-A 52 18 873 ist ein Coriolis-Massedurchflußaufnehmer beschrieben, der in eine Rohrleitung mittels eines einlaß- und eines auslaßseitigen Anschlußelements einzusetzen ist,
- mit einem Schwingsystem, das mindestens ein im Betrieb von einem zu messenden Fluid durchströmtes Meßrohr umfaßt,
- mit einer elektromagnetischen Erregeranordnung von Schwingungen des Schwingsystems,
   -- die mindestens eine von einer Erregerstromquelle gespeiste, niederohmige Erregerspule, einen einen Dauermagneten enthaltenden Kern und einen Anker aufweist, und
- mit jeweils einem Sensor für die einlaß- bzw. die auslaßseitigen Schwingungen, der jeweils im gleichen Abstand zwischen der Mitte des Meßrohrs und dem einlaß-bzw. dem auslaßseitigen Anschlußelement angeordnet ist.

Die Erregerspule wird von einer Erregerstromquelle mit einem Spulenstrom gespeist, wie sie z.B. als Phase-Locked Loop in der US-A 48 01 897 beschrieben ist, wodurch die Frequenz des Spulenstroms mit der momentanen, von der Dichte des zu messenden Fluids abhängigen, mechanischen Resonanzfrequenz des Schwingsystems verrastet wird und diese beiden Frequenzen somit im allgemeinen identisch sind.

Insbesondere bei Massedurchflußaufnehmern der in der US-A 55 31 126 beschriebenen Art mit Meßrohr und Blindrohr weicht die mechanische Schwingsystem-Resonanzfrequenz von der Betriebsfrequenz des Schwingsystems geringfügig, z.B. um einige Hertz, ab.

Wenn nun das Schwingsystem von, z.B. aus der angeschlossenen Rohrleitung stammenden, Störvibrationen, die eine Frequenz enthalten, die gleich der mechanischen Resonanzfrequenz des Schwingsystems ist, erregt wird, verfälscht diese störungsbedingte, gegenüber der Erregung durch den Erregerstrom zusätzliche Erregung das Meßergebnis.

Es ist daher ein Ziel der Erfindung, diese Verfälschung möglichst optimal zu unterdrücken.

Hierzu besteht die Erfindung in einem Coriolis-Massedurchflußaufnehmer, der in eine Rohrleitung mittels eines einlaß- und eines auslaßseitigen Anschlußelements einzusetzen ist,
- mit einem Schwingsystem, das mindestens ein im Betrieb von einem zu messenden Fluid durchströmtes Meßrohr umfaßt,
- mit einer elektromagnetischen Erregeranordnung von Schwingungen des Schwingsystems,
   -- welche Erregeranordnung mindestens eine von einer Erregerstromquelle gespeiste, niederohmige Erregerspule, einen einen Dauermagneten enthaltenden Kern und einen Anker aufweist,
- mit einem nach Art einer Parallelschaltung mit der Erregerspule gekoppelten Kondensator, dessen Kapazität in Abhängigkeit von der Induktivität der Erregerspule so gewählt ist, daß die Resonanzfrequenz des von Kondensator und Erregerspule gebildeten elektrischen Parallelresonanzkreises ungefähr gleich der mechanischen Resonanzfrequenz des Schwingsystems ist, und
- mit jeweils einem Sensor für die einlaß- bzw. die auslaßseitigen Schwingungen, der jeweils im gleichen Abstand zwischen der Mitte des Meßrohrs und dem einlaß-bzw. dem auslaßseitigen Anschlußelement angeordnet ist.

Nach einer vorteilhaften ersten Ausgestaltung der Erfindung ist der Kondensator einer einzigen Erregerspule parallelgeschaltet.

Nach einer vorteilhaften zweiten Ausgestaltung der Erfindung sind die Erregerspule als Primärspule und eine Sekundärspule auf dem Kern angeordnet und der Kondensator ist der Sekundärspule parallelgeschaltet.

Nach einer vorteilhaften dritten Ausgestaltung der Erfindung ist der Kern ein Schnittbandkern.

Ein Vorteil der Erfindung besteht darin, daß die Erregerspule mit angekoppeltem Kondensator für den zugeführten Erregerstrom einen Parallelresonanzkreis bildet, so daß im Bereich von dessen Resonanzfrequenz eine Stromüberhöhung auftritt, die eine gegenüber der vom zugeführten Erregerstrom stark erhöhte Erregerkraft bewirkt.

Ein weiterer Vorteil der Erfindung besteht darin, daß mechanische Störschwingungen, insb. mit einer der mechanischen Resonanzfrequenz des Schwingsystems gleichen Frequenz, durch den an die Erregerspule angekoppelten und sie überbrückenden Kondensator stark gedämpft werden. Dies ist darauf zurückzuführen, daß im Gegensatz zu der Erregerstromquelle, die, wie erwähnt, einen ParallelResonanzkreis speist, das elektrische Äquivalent der Störsignalquelle die niedrige Impedanz eines von Erregerspule und Kondensator gebildeten SerienResonanzkreises und somit wegen der Niederohmigkeit der Erregerspule und der dadurch bedingten niedrigen Serienresonanz-Impedanz praktisch fast einen Kurzschluß speist, so daß das störfrequente Signal praktisch kurzgeschlossen wird und das Meßergebnis nicht mehr verfälschen kann.

Die Erfindung wird nun anhand der Figuren der Zeichnung näher erläutert, in der ein Ausführungsbeispiel dargestellt ist.
- Fig. 1: zeigt das elektrische Schaltbild einer Erregeranordnung mit zugehöriger Erregerstromquelle,
- Fig. 2: zeigt im Schnitt eine erste Variante einer Erregeranordnung,
- Fig. 3: zeigt im Schnitt eine zweite Variante einer Erregeranordnung,
- Fig. 4: zeigt im Schnitt eine dritte Variante einer Erregeranordnung,
- Fig. 5: zeigt im Schnitt eine Weiterbildung der ersten Variante der Erregeranordnung,
- Fig. 6: zeigt im Schnitt eine Weiterbildung der zweiten Variante der Erregeranordnung,
- Fig. 7: zeigt das elektrische Schaltbild der Weiterbildungen nach den Fig. 5 und 6,
- Fig. 8: zeigt in teilweise geschnittener Längsansicht die Anwendung der Erregeranordnung bei einer ersten Art eines Massedurchflußaufnehmers, nämlich mit einem einzigen Meßrohr,
- Fig. 9: zeigt in teilweise geschnittener Längsansicht die Anwendung der Erregeranordnung bei einer zweiten Art eines Massedurchflußaufnehmers, nämlich mit einem einzigen geraden Meßrohr und einem dazu parallelen Blindrohr,
- Fig. 10: zeigt in teilweise geschnittener Längsansicht die Anwendung der Erregeranordnung bei einer dritten Art eines Massedurchflußaufnehmers, nämlich mit einem einzigen geraden Meßrohr und einem dazu koaxialen Blindrohr, und
- Fig. 11: zeigt in teilweise geschnittener Längsansicht die Anwendung der Erregeranordnung bei einer vierten Art eines Massedurchflußaufnehmers, nämlich mit zwei parallelen Meßrohren.

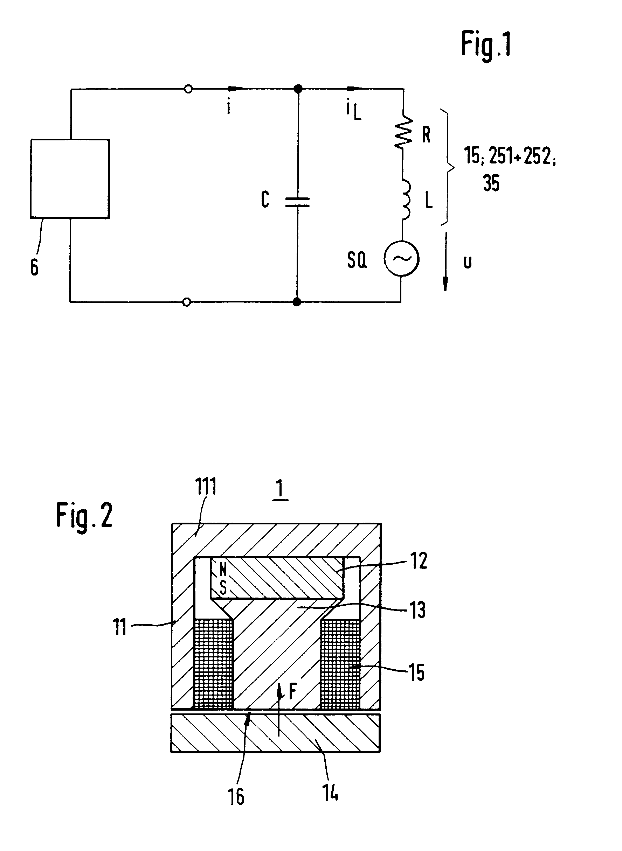

Das elektrische Schaltbild der Fig. 1, das teilweise zugleich das Ersatzschaltbild einer Erregeranordnung eines Schwingsystems eines Coriolis-Massedurchflußaufnehmers ist, zeigt einen ohmschen Widerstand R einer Erregerspule 15 bzw. 251+252 bzw. 35 und eine dazu in Serie liegende Induktivität L dieser Erregerspule.

Zu dieser Serienschaltung aus Widerstand R und Induktivität L liegt ferner eine Störsignalquelle SQ in Serie, die ersatzschaltbildmäßig eine Störspannung u repräsentiert, die in der Erregerspule immer dann induziert wird, wenn das Schwingsystem von den genannten Störvibrationen erregt wird. Dann wirkt die Erregeranordnung nämlich als Wechselspannungsgenerator, der die Störspannung u erzeugt.

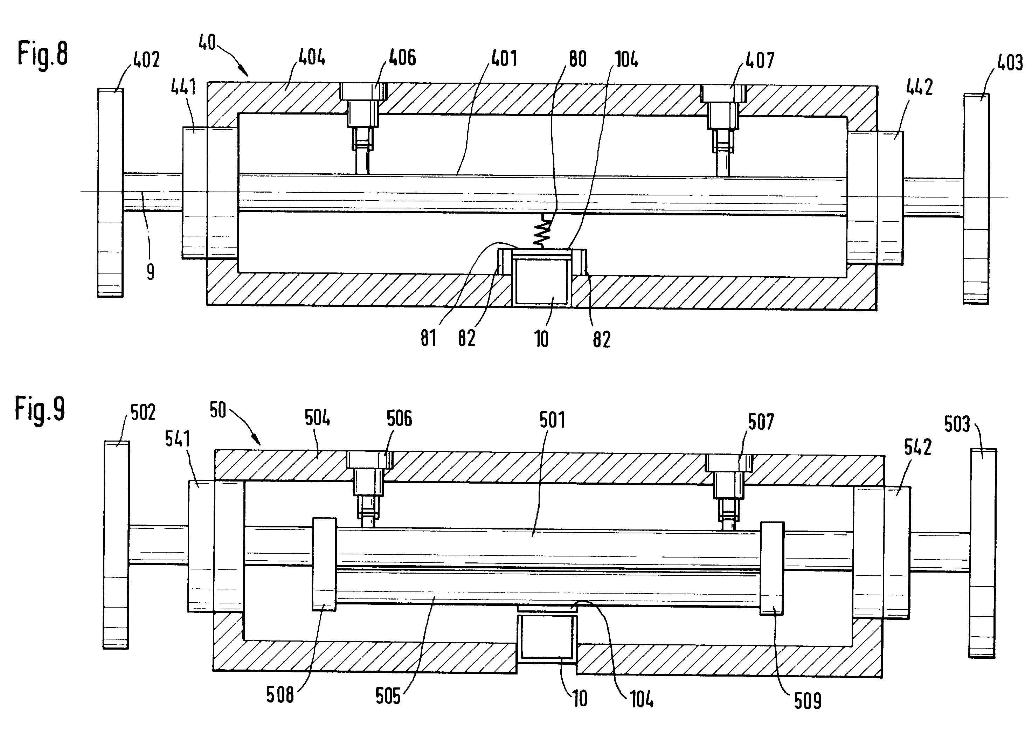

Der Serienschaltung aus den drei erwähnten, der Erregerspule zugeordneten Größen R, L, SQ ist ein Kondensator der Kapazität C parallelgeschaltet. Diese Parallelschaltung wird von einer Erregerstromquelle 6 mit einem Erregerstrom i gespeist, dessen Frequenz gleich der mechanischen Resonanzfrequenz des genannten Schwingsystems ist. Der Aufbau solcher Schwingsysteme ist weiter unten in Zusammenhang mit den Fig. 8 bis 11 näher erläutert. Der Erregerstrom i bewirkt in der Erregerspule einen Spulenstrom i_{L}.

Als Erregerstromquelle 6 können im Stand der Technik von Coriolis-Massedurchflußmessern beschriebene Anordnungen dienen, vgl. z.B. die oben erwähnte US-A 48 01 897.

Die Kapazität C des Kondensators ist so zu bemessen, daß die Resonanzfrequenz des von Kapazität C und Induktivität L gebildeten elektrischen Parallelresonanzkreises, im folgenden als elektrische Resonanzfrequenz bezeichnet, ungefähr gleich der mechanischen Resonanzfrequenz des Schwingsystems ist.

Dieser Bemessung liegt die bekannte Formel für die Resonanz-Kreisfrequenz Ω eines LC-Schwingkreises zugrunde: Ω² = (LC)⁻¹; daraus folgt für C: C = (Ω²L)⁻¹. Dabei ist Ω = 2πf, wobei f die (elektrische) Resonanzfrequenz des LC-Schwingkreises ist.

Bei Coriolis-Massedurchflußaufnehmern wird meist die mechanische Betriebsfrequenz f_{b} des Schwingsystems gleich dessen mechanischer Resonanzfrequenz fₘ gewählt, da dann am wenigstens Antriebsenergie erforderlich ist. Diese Gleichheit (f_{b} = fₘ) von Betriebs- und Resonanzfrequenz des Schwingsystems ist jedoch nicht zwingend, sondern das Schwingsystem kann auch mit einer Betriebsfrequenz f_{b} erregt werden, die um eine Frequenzdifferenz von einigen Hertz von der Resonanzfrequenz fₘ abweicht.

Sowohl bei Gleichheit von Betriebs- und Resonanzfrequenz als auch bei Betrieb mit der erwähnten Frequenzdifferenz wird der Einfluß einer Störung, die die mechanische Resonanzfrequenz zusätzlich erregen will, aufgrund des Kondensators unterdrückt bzw. gedämpft.

Bei der in Fig. 2 im Schnitt gezeigten ersten Variante einer elektromagnetischen Erregeranordnung 1, die bevorzugt kreiszylinder-förmig ist, umfaßt diese einen weichmagnetischen Spulenbecher 11 mit einem Becherboden 111, einen einen Dauermagneten 12 enthaltenden Kern 13, einen weichmagnetischen Anker 14 und eine niederohmige Erregerspule 15. Auf den Kern 13 ist die Erregerspule 15 gewickelt. Der Dauermagnet 12 hat einen Nordpol N sowie einen Südpol S und ist zwischen dem Kern 13 und dem Boden 111 des Spulenbechers 11 angeordnet.

Die vom Dauermagneten 12 abgewandten Enden des Spulenbechers 11 und des Kerns 13 fluchten und halten gegenüber dem Anker 14 einen Luftspalt 16 ein. Wird nun die Erregerspule 15 mit dem erwähnten Erregerstrom i gespeist, so wirkt auf den Anker eine Kraft F ein.

Im Gegensatz zu einer elektrodynamischen Erregeranordnung, bei der sich eine Spule in einem Magnetfeld bewegt, gilt nach Maxwell für die Kraft F einer elektromagnetischen Erregeranordnung, daß sie proportional zum Quadrat aus der Summe der konstanten Induktion B₁₂ des Dauermagneten 12 und der von der Erregerspule 15 erzeugten Wechselinduktion B₁₅ ist: F ∼ (B₁₂ + B₁₅)² = B₁₂² + 2B₁₂B₁₅ + B₁₅²

Die die Schwingungserregung ermöglichende Wechselkraft F≈ wird aber allein durch den mittleren Term 2B₁₂B₁₅ bestimmt, da der Term B₁₂² konstant ist und der Term B₁₅² die doppelte Frequenz des die Wechselinduktion B₁₅ erzeugenden Erregerstroms i hat. Die Frequenz fᵢ des Erregerstroms i wird, wie oben erwähnt, gleich der mechanischen Resonanzfrequenz fₘ oder gleich einer resonanznahen Betriebsfrequenz f_{b} des Schwingsystems gewählt. Daher ist die Frequenz des Terms B₁₅² doppelt so groß wie fᵢ - es gilt sin²2πfᵢ = 0,5(1 - cos4πfᵢ) - und liegt somit weitab von der Resonanz- bzw. Betriebsfrequenz; der Term B₁₅² ist daher vernachlässigbar.

Für die Wechselkraft F≈ ergibt sich somit: F≈ ∼ 2B₁₂B₁₅. Daraus folgt, daß die Wechselkraft F≈ umso größer wird, je größer die Induktion B₁₂ des Dauermagneten 12 gewählt wird.

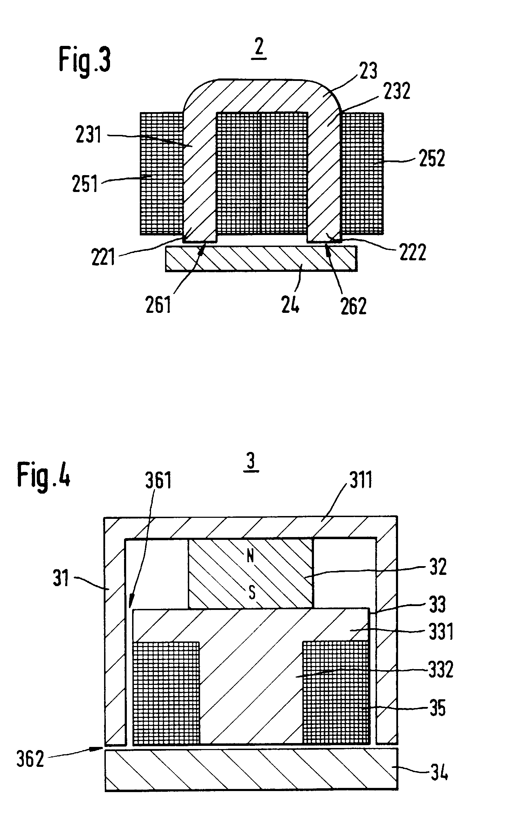

Bei der in Fig. 3 im Schnitt gezeigten zweiten Variante einer elektromagnetischen Erregeranordnung 2, die bevorzugt planar ist, umfaßt diese einen U-förmigen weichmagnetischen Schnittbandkern 23, je einen am jeweiligen Ende von dessen beiden Schenkeln 231, 232 angeordneten Dauermagneten 221, 222, einen weichmagnetischen Anker 24 und eine auf den Schenkel 231 gewickelte niederohmige erste Teilspule 251 sowie eine auf den Schenkel 222 gewickelte niederohmige zweite Teilspule 252.

Die beiden Teilspulen 251, 252 sind gleichsinnig in Serie geschaltet und bilden somit eine der Erregerspule 15 von Fig. 2 entsprechende Erregerspule. Zwischen dem Dauermagnet 221 bzw. 222 und dem Anker 24 ist jeweils ein Luftspalt 261 bzw. 262 vorhanden, über den die Maxwell'sche Kraft jeweils wirksam ist.

Die im Schnitt der Fig. 4 dargestellte dritte Variante einer elektromagnetischen Erregeranordnung 3 ist wieder kreiszylinder-förmig und umfaßt einen weichmagnetischen zylindrischen Spulenbecher 31, auf einer Innenseite von dessen Becherboden 311 ein Dauermagnet 32 befestigt ist, der einen magnetischen Nordpol N und einen magnetischen Südpol S hat. In Fig. 4 liegt somit die Außenfläche des Nordpols N des Dauermagneten 32 am Becherboden 311 an.

Die elektromagnetische Erregeranordnung 3 enthält ferner einen weichmagnetischen, im Längsschnitt T-förmigen Kern 33 mit einer Kopfplatte 331, die am Dauermagneten 32 flächig anliegt, in Fig. 4 also an der Außenfläche von dessen Südpol S.

Die Kopfplatte 331 hält einen ersten Luftspalt 361 zwischen der Innenseite des Spulenbechers 31 und einer Umfangsfläche der Kopfplatte 331 ein. Der Kern 33 hat ferner einen zylindrischen Fuß 332, auf den eine niederohmige Erregerspule 35 gewickelt ist.

Die jeweiligen Endflächen von Kern 33 und Spulenbecher 31 fluchten und halten gegenüber einem Anker 34 einen zweiten Luftspalt 362 ein. Der Dauermagnet 32 ist in Richtung der Längsachse von Spulenbecher 31, Fuß 332 und Erregerspule 15 magnetisiert. Zwischen dem Anker 34 und dem zweiten Luftspalt 362 wirkt die Maxwell'sche Kraft.

Auch bei der zweiten Variante nach Fig. 3 und der dritten Variante nach Fig. 4 ist die Maxwell'sche Kraft proportional zum Quadrat aus der Summe der konstanten Induktion der Dauermagneten 221, 222 bzw. des Dauermagneten 32 und der von der Erregerspule 25 bzw. 35 erzeugten Wechselinduktion.

Bei der dritten Variante nach Fig. 4 ist der Dauermagnet 32 für ein von der Erregerspule 35 selbst erzeugtes Wechselmagnetfeld äquivalent einem Luftspalt, dessen Weite gleich der Längsabmessung des Dauermagneten 32 ist, so daß die Erregerspule 35 einen Magnetkreis mit hohem magnetischen Widerstand speisen muß.

Durch die spezielle Ausbildung des Kerns 33 wird jedoch erreicht, daß das von der Erregerspule 35 im Kern 33 erzeugte Wechselmagnetfeld sich in einem Magnetkreis aufbauen kann, der den Dauermagneten 32 nicht enthält, so daß der magnetische Widerstand dieses Magnetkreises wesentlich kleiner ist als z.B. bei der ersten Variante.

Der von der Erregerspule 35 gespeiste Magnetkreis setzt sich nämlich lediglich aus der Kopfplatte 331 und dem Fuß 332 des Kerns 33, dem zur Öffnung hin liegenden Teil des Spulenbechers 31, dem Anker 34 und den beiden Luftspalten 361, 362 zusammen. Zusätzlich hat der Dauermagnet 32 einen eigenen Magnetkreis, der nämlich über den Boden 311 und die benachbarten Teile des Spulenbechers 31 sowie die Kopfplatte 331 und den ersten Luftspalt 361 geschlossen ist.

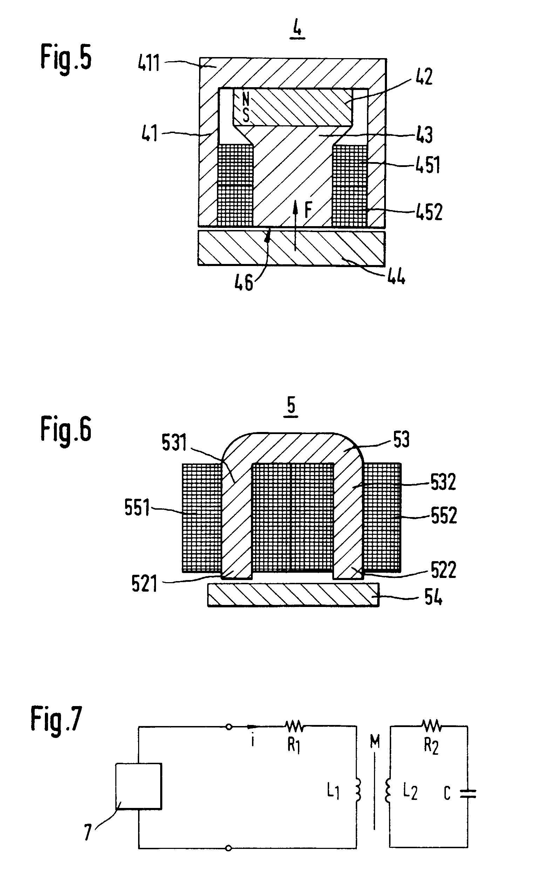

Die Fig. 5 zeigt in Form einer Erregeranordnung 4, die bevorzugt kreiszylinder-förmig ist, eine Weiterbildung der Erregeranordnung 1 nach Fig. 2, und zwar ist die dortige Erregerspule 15 als eine Primärspule 451 ausgebildet, die mit einer niederohmigen Sekundärspule 452 nach Art eines Transformators zusammenwirkt.

Ferner umfaßt die Erregeranordnung 4 einen weichmagnetischen Spulenbecher 41 mit einem Becherboden 411, einen einen Dauermagneten 42 enthaltenden Kern 43, einen weichmagnetischen Anker 44. Auf den Kern 43 sind die beiden Spulen 451, 452 gewickelt. Der Dauermagnet 42 hat einen Nordpol N sowie einen Südpol S und ist zwischen dem Kern 43 und dem Boden 411 des Spulenbechers 41 angeordnet.

Die vom Dauermagneten 42 abgewandten Enden des Kerns 43 und des Spulenbechers 41 fluchten und halten gegenüber dem Anker 44 einen Luftspalt 46 ein. Wird nun die Primärspule 451 mit dem erwähnten Erregerstrom i gespeist, so wirkt auf den Anker wieder die oben erläuterte Kraft F ein.

Die Fig. 6 zeigt in Form einer Erregeranordnung 5, die bevorzugt planar ist, eine Weiterbildung der Erregeranordnung 2 nach Fig. 3, und zwar ist die dortige Erregerspule 25 als eine Primärspule 551 ausgebildet, die mit einer niederohmigen Sekundärspule 552 nach Art eines Transformators zusammenwirkt.

Die Erregeranordnung 5 umfaßt ferner einen U-förmigen weichmagnetischen Schnittbandkern 53, je einen am jeweiligen Ende von dessen beiden Schenkeln 531, 532 angeordneten Dauermagneten 521, 522 und einen weichmagnetischen Anker 54. Auf den Schenkel 531 ist die Primärspule 551 gewickelt und auf den Schenkel 532 die niederohmige Sekundärspule 552. Zwischen den Dauermagneten 521 bzw. 522 und dem Anker 54 ist jeweils ein dem Luftspalt 261 bzw. 262 von Fig.3 entsprechender Luftspalt vorhanden, über den die Maxwell'sche Kraft jeweils wirksam ist.

Das elektrische Schaltbild der Fig. 7, das teilweise zugleich das Ersatzschaltbild der Erregeranordnungen 4 bzw. 5 von Fig. 5 bzw. 6 ist, zeigt sekundärseitig einen niederohmigen Widerstand R₂ der Sekundärspule 452 bzw. 552 und eine dazu in Serie liegende Induktivität L₂ dieser Sekundärspule. Dieser Serienschaltung aus Widerstand R₂ und Induktivität L₂ ist ein Kondensator der Kapazität C parallelgeschaltet.

Primärseitig liegt ein ohmscher Widerstand R₁ der Primärspule 451 bzw. 551 mit einer Induktivität L₁ dieser Primärspule in Serie. Eine Gegeninduktivität M ergibt sich, da Primärspule 451 bzw. 551 und Sekundärspule 452 bzw. 552 durch den jeweiligen Kern 43 bzw. 53 magnetisch miteinander gekoppelt sind. Wegen dieser Kopplung ist der Kondensator der Kapazität C mit der Primärseite gekoppelt bzw. dieser transformatorisch parallelgeschaltet.

Die primärseitige Serienschaltung von Widerstand R₁ und Induktivität L₁ wird von einer Erregerstromquelle 7 mit einem Erregerstrom i gespeist, dessen Frequenz gleich der mechanischen Resonanzfrequenz des Schwingsystems eines Coriolis-Massedurchflußaufnehmers ist.

Die Kapazität C des Kondensators ist so zu bemessen, daß die elektrische Resonanzfrequenz des von der Kapazität C und der Induktivität L₂ gebildeten Parallelresonanzkreises ungefähr gleich der mechanischen Resonanzfrequenz des Schwingsystems ist. Die elektrische Resonanzfrequenz und die mechanische Resonanzfrequenz unterscheiden sich somit geringfügig voneinander um eine Resonanzfrequenz-Differenz, die bei Resonanzfrequenzen in der Größenordnung von 1 kHz z.B. einige Hertz betragen kann.

Auch bei der Erregeranordnung von Fig. 4 kann die transformatorische Ankopplung des Kondensators vorgesehen werden, indem zusätzlich zur Erregerspule 35 von Fig. 4 als Primärspule eine Sekundärspule vorgesehen wird.

Erregeranordnungen nach den Fig. 2 bis 6 oder andere Erregeranordnungen dienen zur Erregung eines Schwingsystems, das im Betrieb mindestens ein von einem zu messenden Fluid durchströmtes Meßrohr umfaßt und das Teil eines nach dem Coriolisprinzip arbeitenden Massedurchfluß-Meßgeräts ist. Das Schwingsystem ist mittels des jeweiligen Ankers 14, 24, 34, 44, 54 mechanisch an die jeweilige Erregeranordnung 1, 2, 3, 4, 5 angekoppelt.

In den Fig. 8 bis 11 sind vier verschiedene Arten von Coriolis-Massedurchflußaufnehmern dargestellt, deren jede von einer Erregeranordnung 10, z.B. entsprechend den Fig. 2 bis 6, zu Schwingungen erregt werden kann. In den Fig. 8 bis 11 sind deshalb die jeweiligen Erregeranordnungen lediglich schematisch angedeutet, ohne den jeweiligen Aufbau zeichnerisch zu spezifizieren.

Die Fig. 8 zeigt eher schematisch und in teilweise geschnittener Längsansicht einen Massedurchflußaufnehmer 40 mit einem einzigen Meßrohr 401, das über Flansche 402, 403 mit einer nicht dargestellten Rohrleitung zu verbinden ist, in der ein bezüglich seines Massedurchflusses zu messendes Fluid strömt.

Das Meßrohr 401 ist in einem als Trägerrohr ausgebildeten Tragrahmen 404 mittels Endstücken 441, 442 jeweils endseits eingespannt, so daß es, falls es, wie in Fig. 8 dargestellt ist, gerade ist, zu balkenartigen Schwingungen erregbar ist.

Hierzu ist die elektromagnetische Erregeranordnung 10 mit ihrem zugehörigen Spulenbecher in die Wand des Tragrahmens 404 eingelassen und darin befestigt, und zwar in dessen längsseitiger Mitte. Der zugehörige Anker 104 ist über einen als Spiralfeder 80 ausgebildeten Körper mit dem Meßrohr 401 mechanisch verbunden. Ferner ist der Anker 104 über eine Membran 81 und eine Membranhalterung 82 mit dem Tragrahmen 404 mechanisch verbunden. Somit ist der Anker 104 schwingfähig befestigt, und seine Schwingungen werden mittels der Spiralfeder 80 auf das Meßrohr 401 übertragen.

Das Schwingsystem besteht hier aus dem Meßrohr 401, der Spiralfeder 80, dem Anker 104 und der Membran 21. Der Anker 104 übernimmt hier die Funktion eines mit dem Meßrohr 401 in Gegenphase schwingenden Körpers.

Auf der der Befestigungsstelle der Erregeranordnung 10 gegenüberliegenden Seite des Tragrahmens 404 sind darin mit jeweiligem Abstand zur Mitte des Meßrohrs 401 zwei Sensoren 406, 407 für dessen Schwingungen befestigt.

Das Meßrohr 401 kann, wie in Fig. 8 zu sehen ist, gerade sein, oder es kann in einer Ebene, die senkrecht zur Zeichenebene ist, mehr oder weniger stark gebogen sein; z.B. kann das Meßrohr 401 U- oder Ω-förmig gebogen sein.

In diesem Falle wirkt die Erregeranordnung 10 dann zweckmäßigerweise auf den Scheitelpunkt des U oder des Ω ein, und der Tragrahmen 404 erstreckt sich bis zu dieser Stelle. Das gebogene, insb. U- oder Ω-förmige, Meßrohr 401 führt hier Biegeschwingungen um eine Achse aus, die identisch mit der Längsachse 9 der Fig. 2 ist. Die Schwingungssensoren sind Teilen des Meßrohrs zugeordnet, die zwischen jeweils einem Endstück und dem Scheitelpunkt liegen.

Die Fig. 9 zeigt eher schematisch und in teilweise geschnittener Längsansicht einen Massedurchflußaufnehmer 50 mit einem einzigen Meßrohr 501, das über Flansche 502, 503 mit der wieder nicht dargestellten, das zu messende Fluid führenden Rohrleitung zu verbinden ist.

Das Meßrohr 501 ist in einem als Trägerrohr ausgebildeten Tragrahmen 504 mittels Endstücken 541, 542 jeweils endseits eingespannt, so daß es, da es, wie in Fig. 9 dargestellt und für diese zweite Art allein sinnvoll ist, gerade ist, zu balkenartigen Schwingungen erregbar ist.

Hierzu ist die elektromagnetische Erregeranordnung 10 mit ihrem Spulenbecher in die Wand des Tragrahmens 504 eingelassen und darin befestigt, und zwar in dessen längsseitiger Mitte. Der zugehörige Anker 104 ist an einem Körper befestigt, der als zum geraden Meßrohr 501 parallel verlaufendes gerades Blindrohr 505 ausgebildet und mittels jeweils einer endseitigen Knotenplatte 508, 509 mit dem Meßrohr 501 mechanisch verbunden ist. Somit ist der Anker 104 schwingfähig befestigt, und seine Schwingungen werden mittels des Blindrohrs 505 auf das Meßrohr 501 übertragen. Das Schwingsystem besteht hier aus dem Meßrohr 501, dem Blindrohr 505 und dem Anker 104.

Auf der der Befestigungsstelle der Erregeranordnung 10 gegenüberliegenden Seite des Tragrahmens 504 sind darin mit jeweiligem Abstand zur Mitte des Meßrohrs 501 zwei Sensoren 506, 507 für dessen Schwingungen befestigt.

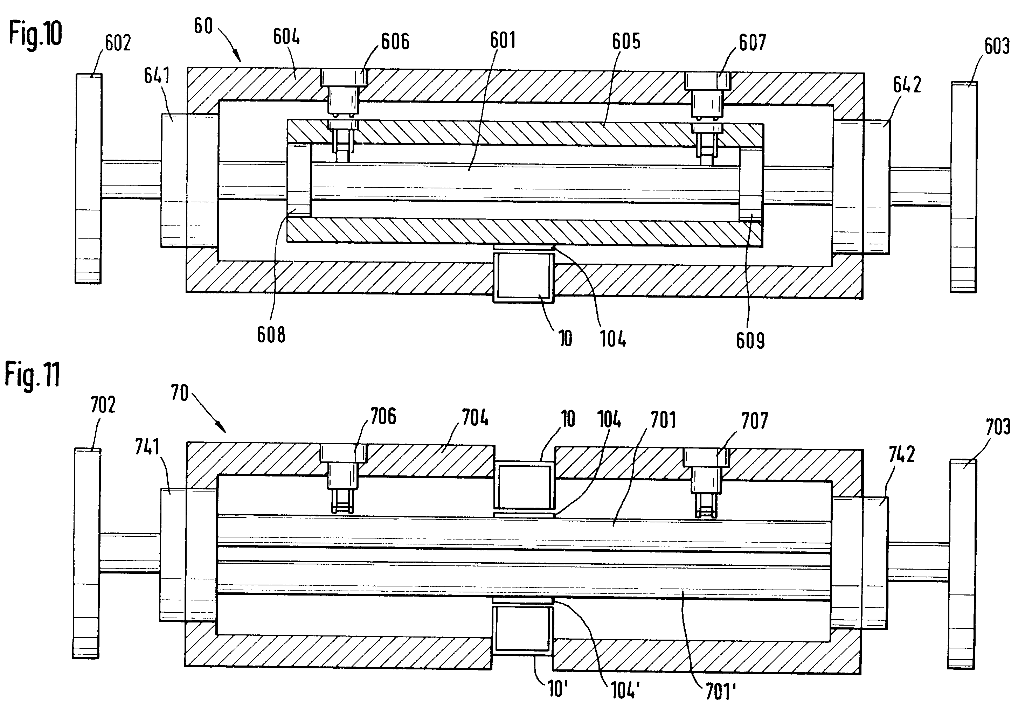

Die Fig. 10 zeigt eher schematisch und in teilweise geschnittener Längsansicht einen Massedurchflußaufnehmer 60 mit einem einzigen Meßrohr 601, das über Flansche 602, 603 mit der wieder nicht dargestellten, das zu messende Fluid führenden Rohrleitung zu verbinden ist.

Das Meßrohr 601 ist in einem als Trägerrohr ausgebildeten Tragrahmen 604 mittels Endstücken 641, 642 jeweils endseits eingespannt, so daß es, da es, wie in Fig. 10 dargestellt und für diese dritte Art allein sinnvoll ist, gerade ist, zu balkenartigen Schwingungen erregbar ist.

Hierzu ist eine elektromagnetische Erregeranordnung 10 mit ihrem Spulenbecher in die Wand des Tragrahmens 604 eingelassen und darin befestigt, und zwar in dessen längsseitiger Mitte. Der zugehörige Anker 104 ist an einem Körper befestigt, der als zum geraden Meßrohr 601 koaxiales Blindrohr 605 ausgebildet und mittels jeweils einer Endplatte 608, 609 mit dem Meßrohr 601 mechanisch verbunden ist. Somit ist der Anker 104 schwingfähig befestigt, und seine Schwingungen werden mittels des Blindrohrs 605 auf das Meßrohr 601 übertragen. Das Schwingsystem besteht hier aus dem Meßrohr 601, dem koaxialen Blindrohr 605 und dem Anker 104.

Auf der der Befestigungsstelle der Erregeranordnung 10 gegenüberliegenden Seite des Tragrahmens 604 sind darin mit jeweiligem Abstand zur Mitte des Meßrohrs 601 zwei Sensoren 606, 607 für dessen Schwingungen befestigt.

Der prinzipielle Aufbau der Massedurchflußaufnehmer der Fig. 9 bzw. 10 entspricht den Anordnungen der Fig. 1 bzw. 2 der WO-A 95/03528.

Die Fig. 11 zeigt eher schematisch und in teilweise geschnittener Längsansicht einen Massedurchflußaufnehmer 70 mit zwei parallelen Meßrohren 701, 701', der über Flansche 702, 703 mit der wieder nicht dargestellten, das zu messende Fluid führenden Rohrleitung zu verbinden ist.

Die Meßrohre 701, 701' sind in einem als Trägerrohr ausgebildeten Tragrahmen 704 mittels Endstücken 741, 742 jeweils endseits eingespannt, so daß sie, wenn sie gerade sind, zu balkenartigen Schwingungen erregbar sind.

Hierzu ist eine erste elektromagnetische Erregeranordnung 10 mit ihrem Spulenbecher in die Wand des Tragrahmens 704 eingelassen und darin befestigt, und zwar in dessen längsseitiger Mitte. Der zugehörige Anker 104 ist am Meßrohr 701 befestigt.

Auf der der Befestigungsstelle der Erregeranordnung 10 gegenüberliegenden Seite des Tragrahmens 704 ist darin eine zweite elektromagnetische Erregeranordnung 10' mit ihrem Spulenbecher in die Wand des Tragrahmens 704 eingelassen und darin befestigt, und zwar wieder in dessen längsseitiger Mitte. Der zugehörige Anker 104' ist am Meßrohr 701' befestigt.

Somit sind die Anker 104, 104' jeweils schwingfähig befestigt, und ihre Schwingungen werden jeweils auf die Meßrohre 701, 701' übertragen. Das Schwingsystem besteht hier aus den beiden Meßrohren 701, 701' und den beiden Ankern 104, 104'.

Ferner sind auf der der Befestigungsstelle der Erregeranordnung 10 gegenüberliegenden Seite des Tragrahmens 704 darin mit jeweiligem Abstand zur Mitte des Meßrohrs 701' zwei Sensoren 706, 707 für dessen Schwingungen befestigt.

Die beiden Meßrohre 701, 701' werden mittels der beiden Erregeranordnungen 10, 10' so erregt, daß sie, wenn sie gerade sind, in der Zeichenebene gegeneinander schwingen, also Bewegungen aufeinander zu oder voneinander weg ausführen.

Die beiden Meßrohre 701, 701' können, wie in Fig. 11 zu sehen ist, gerade sein, oder sie können in jeweils einer Ebene, die senkrecht zur Zeichenebene ist, parallel zueinander verlaufen und mehr oder weniger stark gebogen sein; z.B. können die Meßrohre 701, 701' jeweils U- oder Ω-förmig gebogen sein.

In diesem Falle wirken die Erregeranordnungen 10, 10' dann zweckmäßigerweise jeweils auf den Scheitelpunkt des U oder des Ω ein, und der Tragrahmen 704 erstreckt sich bis zu dieser Stelle. Die gebogenen, insb. U- oder Ω-förmigen, Meßrohre führen hier jeweils Biegeschwingungen um eine jeweilige Achse aus, die identisch mit der jeweiligen Längsachse der Meßrohre 701, 701' von Fig. 11 ist. Die Schwingungssensoren sind Teilen des jeweiligen Meßrohrs zugeordnet, die zwischen jeweils einem Endstück und dem jeweiligen Scheitelpunkt liegen.

Insbesondere bei den anhand der Fig. 8 bis 10 erläuterten drei Arten von Massedurchflußaufnehmern weicht, wie oben erläutert, die Betriebsfrequenz des Schwingsystems von dessen mechanischer Resonanzfrequenz geringfügig ab. Wenn nun das Schwingsystem von aus der angeschlossenen Rohrleitung stammenden Störvibrationen auf seiner Resonanzfrequenz erregt wird, verfälschen diese das Meßergebnis.

Diese Verfälschung ist entsprechend der Erfindung dadurch behoben, daß an die Erregerspule der oben erläuterte Kondensator der Kapazität C nach Art einer Parallelschaltung angekoppelt, vorzugsweise der Erregerspule direkt parallelgeschaltet, ist. Die Kapazität C ist in Abhängigkeit von der Induktivität der Erregerspule so gewählt ist, daß die Resonanzfrequenz des von Kondensator und Erregerspule gebildeten elektrischen Serienresonanzkreises ungefähr gleich der mechanischen Resonanzfrequenz des Schwingsystems ist.

Dadurch "sieht" das elektrische Äquivalent der Störsignalquelle, die in Fig. 1 bei Störvibrationen die Störspannung u erzeugt, die niedrige Serienresonz-Impedanz dieses Serienresonanzkreises und somit praktisch fast einen Kurzschluß, so daß das störfrequente Signal das Meßergebnis nicht mehr verfälschen kann.

Mechanische Schwingungen, insb. mit einer der mechanischen Resonanzfrequenz entsprechenden Frequenz, werden somit durch die Erregeranordnung mit parallel gekoppeltem, insb. parallelgeschaltetem, Kondensator stark gedämpft.

## Patentansprüche

1. Coriolis-Massedurchflußaufnehmer (40, 50, 60, 70), der in eine Rohrleitung mittels eines einlaß- und eines auslaßseitigen Anschlußelements (402, 403; 502, 503; 602, 603; 702, 703) einzusetzen ist,
- mit einem Schwingsystem, das mindestens ein im Betrieb von einem zu messenden Fluid durchströmtes Meßrohr (401; 501; 601; 701, 701') umfaßt,
- mit einer elektromagnetischen Erregeranordnung (1, 2, 3, 4, 10) von Schwingungen des Schwingsystems,
-- welche Erregeranordnung mindestens eine von einer Erregerstromquelle (6, 7) gespeiste, niederohmige Erregerspule (15; 251, 252; 35), einen einen Dauermagneten (12; 221, 222; 32; 42; 512, 522) enthaltenden Kern (13, 23, 33, 43, 53) und einen Anker (14, 24, 34, 44, 54, 104) aufweist,
- mit einem nach Art einer Parallelschaltung mit der Erregerspule gekoppelten Kondensator, dessen Kapazität (C) in Abhängigkeit von der Induktivität (L) der Erregerspule so gewählt ist, daß die Resonanzfrequenz des von Kondensator und Erregerspule gebildeten elektrischen Parallelresonanzkreises ungefähr gleich der mechanischen Resonanzfrequenz des Schwingsystems ist, und
- mit jeweils einem Sensor (406, 407; 506, 507; 606, 607; 706, 707) für die einlaß- bzw. die auslaßseitigen Schwingungen, der jeweils im gleichen Abstand zwischen der Mitte des Meßrohrs und dem einlaß- bzw. dem auslaßseitigen Anschlußelement angeordnet ist.

2. Coriolis-Massedurchflußaufnehmer nach Anspruch 1, bei dem der Kondensator einer einzigen Erregerspule parallelgeschaltet ist.

3. Coriolis-Massedurchflußaufnehmer nach Anspruch 1, bei dem die Erregerspule als Primärspule (L₁) und eine Sekundärspule (L₂) auf dem Kern angeordnet sind und der Kondensator der Sekundärspule parallelgeschaltet ist.

4. Coriolis-Massedurchflußaufnehmer nach einem der Ansprüche 1 bis 3, bei dem der Kern ein Schnittbandkern (23, 53) ist.

## Claims

1. A Coriolis mass flow sensor (40, 50, 60, 70) which can be inserted in a pipeline by means of an inlet-side and an outlet-side connecting element (402, 403; 502, 503; 602, 603; 702, 703),
- having an oscillating system which comprises at least one measuring tube (401; 501; 601; 701, 701') through which a fluid to be measured in operation flows,
- having an electromagnetic exciter arrangement (1, 2, 3, 4, 10) for oscillations of the oscillating system,
-- which exciter arrangement has at least one low-resistance exciter coil (15; 251, 252; 35) which is fed from an exciter current source (6, 7), a core (13, 23, 33, 43, 53) which contains a permanent magnet (12; 221, 222; 32; 42; 512, 522), and an armature (14, 24, 34, 44, 54, 104)
- having a capacitor which is coupled to the exciter coil in the manner of a parallel circuit and whose capacitance (C) is selected as a function of the inductance (L) of the exciter coil such that the resonant frequency of the electrical parallel resonant circuit which is formed by the capacitor and the exciter coil is approximately equal to the mechanical resonant frequency of the oscillating system, and
- having a sensor (406, 506, 606, 706) for the inlet-side oscillations, which is arranged with a distance between the center of the measuring tube and the inlet-side connecting element, and a sensor (407, 507, 607, 707) for the outlet-side oscillations, which is arranged with said distance between the center of the measuring tube and the outlet-side connecting element.

2. The Coriolis mass flow sensor as claimed in claim 1, wherein the capacitor is connected in parallel with a single exciter coil.

3. The Coriolis mass flow sensor as claimed in claim 1, wherein the exciter coil, as the primary coil (L₁) and a secondary coil (L₂) are arranged on the core, and the capacitor is connected in parallel with the secondary coil.

4. The Coriolis mass flow sensor as claimed in anyone of claims 1 to 3, wherein the core is a cut strip-wound core (23, 53).

## Revendications

1. Débitmètre massique de Coriolis (40, 50, 60, 70) à placer dans une conduite au moyen d'un élément de connexion (402, 403 ; 502, 503 ; 602, 603 ; 702, 703) du côté entrée et du côté sortie,
- comportant un système oscillant comprenant au moins un tube de mesure (401; 501; 601; 701, 701') traversé en fonctionnement par un fluide à mesurer,
- comportant un dispositif électromagnétique (1, 2, 3, 4, 10) excitateur d'oscillations du système oscillant,
-- lequel dispositif excitateur présente au moins un enroulement excitateur (15; 251, 252; 35) de basse impédance, alimenté par une source de courant excitateur (6, 7), un noyau (13, 23, 33, 43, 53) contenant un aimant permanent (12; 221, 22; 32; 42; 512; 522) et une armature (14, 24, 34, 44, 54, 104),
- comportant un condensateur couplé avec l'enroulement excitateur à la manière d'un circuit en parallèle, la capacité (C) dudit condensateur étant choisie, en fonction de l'inductance (L) de l'enroulement excitateur, de telle sorte que la fréquence de résonance du circuit électrique à résonance parallèle constitué par le condensateur et l'enroulement excitateur est sensiblement égale à la fréquence de résonance mécanique du système oscillant, et
- comportant à chaque fois un capteur (406, 407; 506, 507; 606, 607; 706, 707) pour les oscillations respectivement côté entrée et/ou côté sortie, chacun desdits capteurs étant disposé à la même distance entre le centre du tube de mesure et l'élément de connexion côté entrée et/ou côté sortie.

2. Débitmètre massique de Coriolis selon la revendication 1, dans lequel le condensateur est monté en parallèle à un enroulement excitateur unique.

3. Débitmètre massique de Coriolis selon la revendication 1, dans lequel l'enroulement excitateur en tant qu'enroulement primaire (L₁) et un enroulement secondaire (L₂) sont disposés sur le noyau, et le condensateur est monté en parallèle à l'enroulement secondaire.

4. Débitmètre massique de Coriolis selon l'une des revendications 1 à 3, dans lequel le noyau est un tore enroulé (23, 53).
